# EUROPÄISCHE PATENTSCHRIFT

(11) **EP 3 224 579 B1**
(45) Veröffentlichungstag und Bekanntmachung des Hinweises auf die Patenterteilung: **28.11.2018**
(21) Anmeldenummer: 15763291.0
(22) Anmeldetag: 09.09.2015
(51) Int. Cl.: G01D 21/00, G08C 19/02, G08C 19/22, G01P 21/02, B60R 16/023, G01D 3/08

(54) **ELEKTRONISCHE ANORDNUNG IN EINEM KRAFTFAHRZEUG**
ELECTRONIC ARRANGEMENT IN A MOTOR VEHICLE
DISPOSITIF ÉLECTRONIQUE DANS UN VÉHICULE À MOTEUR

(30) Priorität: 24.11.2014 DE 102014223895
(43) Veröffentlichungstag der Anmeldung: 04.10.2017
(73) Patentinhaber: Continental Teves AG & Co. OHG, 60488 Frankfurt am Main (DE)
(72) Erfinder: ÖSTREICH, Christian, 63584 Gründau (DE); MURAKAMI, Atsushi, 60598 Frankfurt (DE); KUTZNER, Michael, 65843 Sulzbach (DE); WAHL, Holger, 65510 Hünstetten (DE)
(86) Internationale Anmeldenummer: PCT/EP2015/070586
(87) Internationale Veröffentlichungsnummer: WO 2016/082952

(56) Entgegenhaltungen:
- EP-A1- 0 387 601
- EP-A2- 2 106 008
- WO-A1-02/090999
- DE-A1-102012 218 274

## Beschreibung

Die vorliegende Erfindung betrifft eine elektronische Anordnung in einem Kraftfahrzeug gemäß Oberbegriff von Anspruch 1.

Aus der Internationalen Patentanmeldung WO 98/09173 ist ein aktiver Raddrehzahlsensor zur Übertragung der Drehzahlinformation eines Kraftfahrzeugrades an das elektronische Steuergerät einer Bremsanlage bekannt. Das Raddrehzahlsignal wird über eine Stromschnittstelle an das Steuergerät in Form von Rechteckimpulsen übertragen. Der über die Schnittstelle übertragene Strom stellt gleichzeitig die elektrische Energieversorgung für den aktiven Sensor dar, so dass lediglich zwei Leitungen zur Verbindung von Sensor und Steuergerät benötigt werden.

Heutige Fahrzeuge weisen eine Vielzahl elektronischer Kontrolleinheiten auf, welche sensorbasierte Informationen verarbeiten. Um die Informationen eines Sensors, wie beispielsweise eines Raddrehzahlsensors mit Stromschnittstelle, einer Mehrzahl dieser Kontrolleinheiten bereitzustellen, existieren verschiedene Ansätze der Signalverbreitung, z.B. CAN, FlexRay oder Schnittstellenemulation durch Nachbildung eines Sensorsignals auf Hardwareebene, wobei in einem Steuergerät ein Signal erzeugt wird, welches einen Sensor in der Funktion nachbildet. Die dadurch auftretenden Übertragungszeiten der Informationen an die einzelnen Kontrolleinheiten wirken sich nachteilig auf die Reaktionszeiten der diese Informationen verarbeitenden Fahrzeugsysteme aus. Insbesondere für sicherheitsrelevante Kraftfahrzeugsysteme sind möglichst kurze Reaktionszeiten - beispielsweise in Gefahrensituationen - zum Teil unverzichtbar.

In der EP2160008A2 ist ein Sensorsteuergerät für ein Fahrzeug und ein Verfahren zum Betrieb eines solchen Geräts gezeigt. Es ist eine Sensorik vorgesehen, der an eine Stromschnittstelle angeschlossen ist. Im Fall, dass die Energieversorgung der Sensorik durch ein Sensorsteuergerät ausfällt, wird eine Stromsenke angesteuert, über welche die Sensorik Energie aus der Stromschnittstelle entnehmen kann.

In der EP0387601A1 ist ein Signalübertragungssystem mit einem Sender und einem Empfänger offenbart, bei welchem in der Leitung zwischen dem Sender und dem Empfänger derart ausgebildet ist, dass der Empfänger nicht dem Einfluss der Stromrichtung auf der Leitung unterworfen ist. Dies ist vorteilhaft bei einer Übertragung eines Signals mittels der Stromrichtung.

In der WO02/090999A1 ist eine Anordnung offenbart, mittels der je nach Fahrzustand bestimmte Zustandsinformationen eines Raddrehzahlsensors unabhängig von der Fahrgeschwindigkeit abgefragt werden können.

In der DE102012218274 ist ein paralleles Auslesen eines analogen Sensors durch zwei Steuereinheiten offenbart.

Aufgabe der Erfindung ist es daher, eine elektronische Anordnung in einem Kraftfahrzeug bereitzustellen, welches verringerte Reaktionszeiten von Kraftfahrzeugsystemen ermöglicht.

Diese Aufgabe wird durch eine elektronische Anordnung gemäß Anspruch 1 gelöst.

Die Erfindung beschreibt eine elektronische Anordnung in einem Kraftfahrzeug, bei welcher wenigstens ein vorzugsweise aktiver Sensor mittels einer Stromschnittstelle zur Übertragung von Signalen und/oder zur Energieversorgung an eine erste elektronische Kontrolleinheit angebunden ist, wobei sich die Erfindung dadurch auszeichnet, dass eine Anbindung der Stromschnittstelle an wenigstens ein Versorgungspotential über eine zweite elektronische Kontrolleinheit vorgesehen ist.

Durch die Erfindung ist es in vorteilhafter Weise möglich, Sensoren mit Stromschnittstelle, vorzugsweise Raddrehzahlsensor, an zumindest zwei verschiedene elektronischen Kontrolleinheiten anzubinden, wodurch verringerte Reaktionszeiten von Kraftfahrzeugsystemen ermöglicht werden, da die Sensorinformation nahezu gleichzeitig den Kontrolleinheiten bereitgestellt wird. Zudem sind zur Realisierung lediglich geringe oder keine Modifikationen an den Kontrolleinheiten, insbesondere der zweiten Kontrolleinheit, notwendig. Der Sensor überträgt mittels der Stromschnittstelle Drehzahlinformationen in Form von Stromimpulsen mit drehzahlabhängigem zeitlichem Abstand an die elektronischen Kontrolleinheiten. Der über die Schnittstelle übertragene Strom stellt zudem die elektrische Energieversorgung für den Sensor dar.

Die erste elektronische Kontrolleinheit weist gemäß der Erfindung eine Überwachungseinrichtung zur Erkennung einer Störung der über die zweite elektronische Kontrolleinheit realisierten Anbindung an das Versorgungspotential auf. Eine Störung kann dabei beispielsweise eine vollständige Unterbrechung bzw. eine außerhalb eines Toleranzbereichs liegende Abweichung eines Potentials sein. Ein Vorteil davon ist, dass eine Störung der Anbindung der Stromschnittstelle des Sensors an das oder die angebundenen Versorgungspotentiale erkannt und beispielsweise eine entsprechende Störinformation zur Benachrichtigung des Fahrzeugführers ausgegeben werden kann.

Die erste Kontrolleinheit umfasst wenigstens ein Schaltelement und/oder wenigstens eine funktionelle Baugruppe zur Anbindung an das Versorgungspotential, dessen Anbindung über die zweite elektronische Kontrolleinheit realisiert ist. Bei Erkennung einer Störung der über die zweite elektronische Kontrolleinheit realisierten Anbindung an das Versorgungspotential, erfolgt eine Anbindung an dieses Versorgungspotential durch die erste elektronische Kontrolleinheit. Die Funktionsfähigkeit des Sensors ist somit trotz aufgetretener Störung weiterhin gewährleistet. Ist die zweite elektronische Kontrolleinheit an einen Datenbus, bsp. CAN oder FlexRay, angebunden, erfolgt die Bereitstellung der Sensorinformationen im Falle einer Störung der Potentialanbindung bevorzugt mittels dieses Datenbusses, wodurch in vorteilhafter Weise die Informationsverarbeitung durch die zweite elektronische Kontrolleinheit weiterhin erfolgen kann. Insbesondere die in diesem Zusammenhang auftretenden geänderten Reaktionszeiten, können bei der Datenverarbeitung Berücksichtigung finden.

Entsprechend einer bevorzugten Ausführungsform umfassen die erste elektronische Kontrolleinheit und die zweite elektronische Kontrolleinheit jeweils wenigstens eine Messeinrichtung zur Erfassung von Signalen des Sensors. Eine Erfassung der nahezu gleichzeitig den Kontrolleinheiten bereitgestellt Sensorinformation kann somit vorteilhafterweise durch jede Kontrolleinheit separat erfolgen.

Bevorzugt ist durch die zweite elektronische Kontrolleinheit eine Anbindung an ein Bezugspotential des Kraftfahrzeugs vorgesehen.

Zweckmäßigerweise sind Mittel zur Verbesserung der elektromagnetischen Verträglichkeit vorgesehen. Die Störfestigkeit des Sensors kann - im Vergleich zur alleinigen Anbindung an die erste Kontrolleinheit - somit in vorteilhafter Weise nahezu unverändert erhalten werden.

Weitere bevorzugte Ausführungsformen ergeben sich aus der nachfolgenden Beschreibung von Ausführungsbeispielen an Hand von Figuren.

In schematischer Darstellung zeigt:

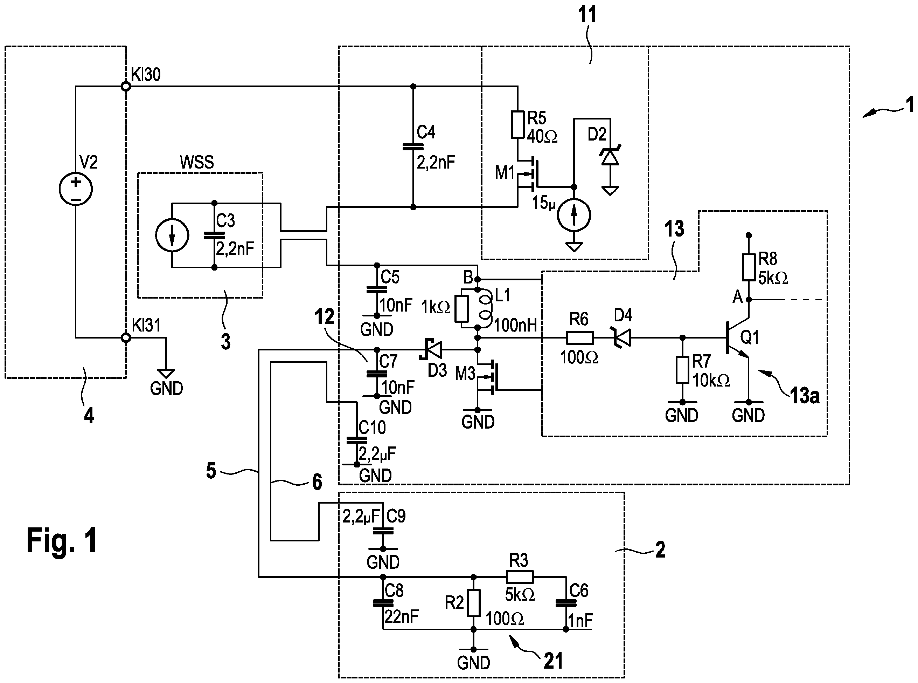

- Fig. 1: ein Ausführungsbeispiel der erfindungsgemäßen elektronischen Anordnung, wobei Raddrehzahlsensor 3 über die zweite elektronische Kontrolleinheit 2 an ein Versorgungspotential von Energiequelle 4 angebunden ist.

Gemäß dem Ausführungsbeispiel der Fig. 1 ist Raddrehzahlsensor 3 mittels Stromschnittstelle an die erste elektronische Kontrolleinheit 1 angeschlossen. Im Unterschied zu einer in der Kontrolleinheit 1 vorgenommenen Anbindung an das Bezugspotential GND (z.B. Klemme 31) von Energiequelle 4, erfolgt die Anbindung an das Bezugspotential GND erfindungsgemäß in der zweiten elektronischen Kontrolleinheit 2, wobei die Bezugspotentialanbindung beispielsweise mittels eines weiteren Steckkontakts über Leitung 5 eines Kabelbaums zu der zweiten Kontrolleinheit 2 geführt ist. Beispielsweise handelt es sich bei der ersten elektronischen Kontrolleinheit 1 um die Elektronik eines elektrohydraulischen Kraftfahrzeugbremsensteuergeräts und bei der zweiten elektronischen Kontrolleinheit 2 um eine Elektronik eines elektronisch betreibbaren Bremskraftverstärkers - auch e-Booster genannt. Die Kontrolleinheiten 1 und 2 werden mittels Energiequelle 4 mit Energie versorgt, wobei Energiequelle 4 insbesondere eine Fahrzeugbatterie ist.

Zur Auswertung der von Raddrehzahlsensor 3 bereitgestellten Signale umfasst die erste Kontrolleinheit 1, bevorzugt auf positiver Potentialseite (z.B. K130), Messeinrichtung 11 zur Messung der durch Raddrehzahlsensor 3 generierten Signale. In der zweiten Kontrolleinheit 2 ist Messeinrichtung 21 - beispielhaft mit weiteren Filtervorrichtungen - zur Erfassung der durch Raddrehzahlsensor 3 Signale vorgesehen.

Eine Unterbrechung der Anbindung von Raddrehzahlsensor 3 an das Bezugspotential GND wird mittels Überwachungseinrichtung 13 erkannt, die in der ersten Kontrolleinheit 1 vorgesehen ist. Bei Auftreten eines solchen Fehlers, erfolgt eine Anbindung an das Bezugspotential GND in der ersten Kontrolleinheit 1, wodurch die Funktionsfähigkeit von Raddrehzahlsensor 3 bei Unterbrechungen, welche im weiteren Verlauf der Bezugspotentialanbindung auftreten, aufrechterhalten werden kann. Eine Zuschaltung des Bezugspotential GND erfolgt bevorzugt mittels Schalter M3, z.B. eines MOSFET, wobei eine Erkennung der Unterbrechung durch Messung des Stroms und/oder der Spannung an Messstelle B vorgenommen wird. Um zu Vermeiden, dass Raddrehzahlsensor 3 in der Zeitspanne zwischen Unterbrechung der Bezugspotentialanbindung und Umschalten von Schalter M3 nicht funktionsfähig ist, kann der Strom währenddessen mittels Schaltung 13a aufgenommen werden. Schalter M3 dient gemäß dieser kombinierten Ausführungsform dazu im Weiteren einen höheren Spannungsabfall über Schaltung 13a zu vermeiden, was bezüglich der Auswertbarkeit der Pegel der Stromwerte von Raddrehzahlsensor 3 vorteilhaft ist. Da Schaltung 13a sowie Schalter M3 eine Anbindung an das Bezugspotential realisieren, können diese eigenständig alternativ oder entsprechend der beschriebenen kombinierten Ausführungsform vorgesehen sein. Eine Unterbrechung der Anbindung kann in Schaltung 13a dabei beispielsweise durch Messung der Spannung an Messstelle A erkannt werden. Überwachungseinrichtung 13 gibt bei Unterbrechung der Bezugspotentialleitung zudem bevorzugt eine entsprechende Fehlerinformation aus. Um eine Kompensation der zusätzlichen Spannungsabfälle, welche bsp. durch Schaltung 13a hervorgerufen werden, zu realisieren, kann für eine Unterbrechung der Anbindung an das Bezugspotential bzw. Versorgungspotential eine angehobene Versorgungsspannung der Radsensorversorgung vorgesehen sein, was beispielsweise mittels Aufwärtswandler und/oder Masseversatz realisiert werden kann.

Da die verwendeten Raddrehzahlsensoren häufig lediglich unter Verwendung zusätzlicher EMV-Maßnahmen die notwendige Störfestigkeit aufweisen, wird die Verkabelung der Raddrehzahlsensoren im Fahrzeug bevorzugt verdrillt ausgeführt, wodurch elektromagnetische Störungen reduziert werden können. Eine direkte einseitige Potentialanbindung an die zweite elektronische Kontrolleinheit, unter Auslassung der ersten elektronischen Kontrolleinheit 1 hätte zur Folge, dass eine Verdrillung der Leitungen des Sensors 3 in diesem Fall jedoch in begrenztem Maße möglich ist, weshalb zum Erhalt bzw. zur Verbesserung der elektromagnetischen Verträglichkeit entsprechend dieser Ausführungsform zusätzliche Mittel vorgesehen werden müssen. Auch die Verfügbarkeit von Sensor 3 würde verschlechtert, was im Sinne der Sicherheitsrelevanz häufig nicht wünschenswert ist.

Um eine verbesserte elektromagnetische Verträglichkeit zu erhalten, ist in Kontrolleinheit 1, parallel zum Strompfad der Bezugspotentialleitung 5, Kondensator 12 vorgesehen, womit eine höhere Robustheit gegenüber Hochfrequenz-Einstrahlung bzw. Einkopplung erreicht wird. Als weitere Maßnahme zur Verbesserung der elektromagnetischen Verträglichkeit kann Leitung 6 in Verbindung mit den Kondensatoren C9 und C10 vorgesehen sein, welche bevorzugt mit Leitung 5 verdrillt ist. Alternativ oder in Ergänzung können in der elektronischen Kontrolleinheit 1 oder 2 weitere EMV-Schutzmaßnahmen, wie beispielsweise Filterschaltungen, vorgesehen sein.

Im Rahmen der Erfindung lässt sich die erfindungsgemäße Anordnung auch in der Weise realisieren, dass alternativ zur Anbindung des Bezugspotentials in der zweiten Kontrolleinheit 2 eine Anbindung an die positive Potentialseite in der zweiten Kontrolleinheit 2 erfolgt und eine entsprechende Potentialleitung von der ersten zur zweiten Kontrolleinheit geführt ist, wobei die Bezugspotentialanbindung in der ersten Kontrolleinheit umgesetzt ist. Weiterhin können weitere elektronische Kontrolleinheiten vorgesehen sein, welche an die Bezugspotentialleitung und/oder positive Potentialleitung entsprechend angebunden sind, wobei in einer abschließenden elektronischen Kontrolleinheit die Anbindung an das entsprechende Potential vorgenommen wird.

In Fig. 1 dargestellte Schaltungsdetails bzw. Werte sind lediglich beispielhaft zu verstehen und können durch im Wesentlichen gleichwirkende funktionelle Baugruppen ersetzt werden.

## Patentansprüche

1. Elektronische Anordnung in einem Kraftfahrzeug, bei welcher wenigstens ein vorzugsweise aktiver Sensor (3) mittels einer Stromschnittstelle zur Übertragung von Signalen und/oder zur Energieversorgung an eine erste elektronische Kontrolleinheit (1) angebunden ist, wobei eine Anbindung der Stromschnittstelle an wenigstens ein Versorgungspotential (KL30,KL31,GND) über eine zweite elektronische Kontrolleinheit (2) vorgesehen ist, **dadurch gekennzeichnet, dass** die erste elektronische Kontrolleinheit (1) eine Überwachungseinrichtung (13) zur Erkennung einer Störung der über die zweite elektronische Kontrolleinheit (2) realisierten Anbindung an das Versorgungspotential (KL30,KL31,GND) aufweist und wobei die erste Kontrolleinheit (1) wenigstens ein Schaltelement (M3,Q1) und/oder wenigstens eine funktionelle Baugruppe (13a) zur Anbindung an das Versorgungspotential (KL30,KL31,GND) umfasst, dessen Anbindung über die zweite elektronische Kontrolleinheit (2) realisiert ist, wobei bei Erkennung einer Störung der über die zweite elektronische Kontrolleinheit (2) realisierten Anbindung an das Versorgungspotential (KL30,KL31,GND), eine Anbindung an dieses Versorgungspotential (KL30,KL31,GND) durch die erste elektronische Kontrolleinheit (1) erfolgt.

2. Elektronische Anordnung gemäß einem der vorhergehenden Ansprüche, **dadurch gekennzeichnet, dass** die erste elektronische Kontrolleinheit (1) und die zweite elektronische Kontrolleinheit (2) jeweils wenigstens eine Messeinrichtung (11,21) zur Erfassung von Signalen des Sensors (3) umfassen.

3. Elektronische Anordnung gemäß einem der vorhergehenden Ansprüche, **dadurch gekennzeichnet, dass** durch die zweite elektronische Kontrolleinheit (2) eine Anbindung an ein Bezugspotential (GND) des Kraftfahrzeugs vorgesehen ist.

## Claims

1. Electronic arrangement in a motor vehicle, in which arrangement at least one, preferably active, sensor (3) is connected to a first electronic control unit (1) by means of a current interface for transmitting signals and/or for supplying power, wherein a connection of the current interface to at least one supply potential (KL30, KL31, GND) is provided via a second electronic control unit (2) **characterized in that** the first electronic control unit (1) comprises a monitoring mechanism (13) for detecting a fault in the connection to the supply potential (KL30, KL31, GND), which connection is implemented via the second electronic control unit (2), and wherein the first control unit (1) comprises at least one switching element (M3, Q1) and/or at least one functional module (13a) for the connection to the supply potential (KL30, KL31, GND), the connection of which supply potential is implemented via the second electronic control unit (2), wherein on a fault being detected in the connection to the supply potential (KL30, KL31, GND), which connection is implemented via the second electronic control unit (2), a connection to this supply potential (KL30, KL31, GND) is made by the first electronic control unit (1).

2. Electronic arrangement according to any of the preceding claims, **characterized in that** the first electronic control unit (1) and the second electronic control unit (2) each comprise at least one measuring mechanism (11, 21) for acquiring signals from the sensor (3).

3. Electronic arrangement according to any of the preceding claims, **characterized in that** the second electronic control unit (2) provides a connection to a reference potential (GND) of the motor vehicle.

## Revendications

1. Dispositif électronique dans un véhicule automobile, dans lequel au moins un capteur (3), de préférence actif, est connecté à une première unité de commande électronique (1) au moyen d'une interface de courant destinée à la transmission de signaux et/ou à l'alimentation en énergie, dans lequel il est prévu une connexion de l'interface de courant à au moins un potentiel d'alimentation (KL30, KL31, GND) par l'intermédiaire d'une seconde unité de commande électronique (2),
**caractérisé en ce que** la première unité de commande électronique (1) comporte un dispositif de surveillance (13) destiné à détecter un défaut de la connexion au potentiel d'alimentation (KL30, KL31, GND) réalisée par l'intermédiaire de la seconde unité de commande électronique (2) et dans lequel la première unité de commande (1) comprend au moins un élément de commutation (M3, Q1) et/ou au moins un module fonctionnel (13a) destiné à la connexion au potentiel d'alimentation (KL30, KL31, GND), dont la connexion est réalisée par la seconde unité de commande électronique (2), dans lequel, lors de la détection d'un défaut de la connexion au potentiel d'alimentation (KL30, KL31, GND) réalisée par l'intermédiaire de la seconde unité de commande électronique (2), une connexion audit potentiel d'alimentation (KL30, KL31, GND) est effectuée par l'intermédiaire de la première unité de commande électronique (1).

2. Dispositif électronique selon l'une des revendications précédentes, **caractérisé en ce que** la première unité de commande électronique (1) et la seconde unité de commande électronique (2) comprennent chacune au moins un dispositif de mesure (11, 21) destiné à détecter des signaux du capteur (3).

3. Dispositif électronique selon l'une des revendications précédentes, **caractérisé en ce qu'**il est prévu une connexion à un potentiel de référence (GND) du véhicule automobile par l'intermédiaire de la seconde unité de commande électronique (2).
